Europäisches Patentamt
European Patent Office
Office européen des brevets

(19)

(11) Publication number: **0 059 013**
**A1**

(12) **EUROPEAN PATENT APPLICATION**

(21) Application number: 82200157.4

(22) Date of filing: 10.02.82

(51) Int. Cl.$^3$: B 23 Q 1/20

(30) Priority: 12.02.81 NL 8100689

(43) Date of publication of application: 01.09.82 Bulletin 82/35

(84) Designated Contracting States: BE DE FR GB IT NL SE

(71) Applicant: N.V. Gereedschapswerktuigenindustrie Hembrug, Hemkade 24a P.O.Box 412, NL-1500 EK Zaandam (NL)

(72) Inventor: Deaves, Donald Henry Thomas, No. 47, Pheasants Way, Rickmansworth Hertfordshire (GB)

(74) Representative: 't Jong, Bastiaan Jacobus et al, OCTROOIBUREAU ARNOLD & SIEDSMA Sweelinckplein 1, NL-2517 GK 's-Gravenhage (NL)

(54) **Tail stock for a machine tool.**

(57) A machine tool comprising a frame (21), a main spindle (16) rotatably journalled in said frame (2), a support (5) displaceable with respect to said frame (2) and a tail stock (4) displaceable with respect to the frame (2) for positioning purposes and fixable in place by fixing means, guide means (25, 26, 27) connected with the frame (2) for guiding the support (5) and the tail stock (4) parallel to the main spindle and a longitudinal gear (30) for displacing the support (5) and provided with an automatic control-device for the automatic control of the machine tool and further provided with a coupling device (310) for relatively coupling and discoupling the tail stock (4) and the support (5), the longitudinal gear (30) constituting a common drive for both of them in the coupled state, said coupling device (310) comprising a position sensor (320) detecting the correct position for coupling the tail stock (4) and the support (5) with one another.

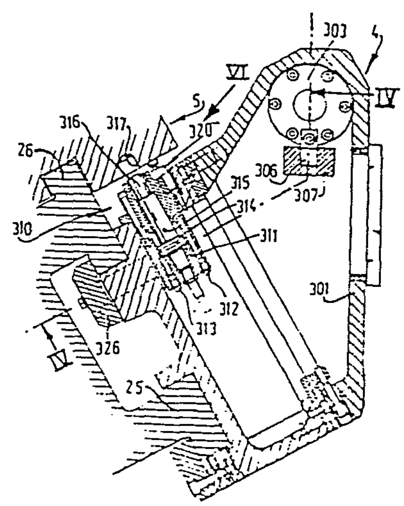


EP 0 059 013 A1

ACTORUM AG

TAIL STOCK FOR A MACHINE TOOL

The invention relates to a machine tool comprising a frame, a main spindle rotatably journalled in said frame, a support displaceable with respect to said frame and a tail stock displaceable with respect to the frame for positioning purposes and fixable in place by fixing means, guide means connected with the frame for guiding the support and the tail stock parallel to the main spindle and a longitudinal gear for displacing the support and provided with an automatic control-device for the automatic control of the machine tool.

It is known to displace the tail stock by hand along the bed of the machine tool in order to position this head with respect to the main spindle. In the case of large machine tools the tail stock is too heavy for manual displacement. In this case it is known to use a manually operable worm gear for positioning the tail stock. Particularly in the case of automatic machine tools, in which the support displacement and the displacement of the tool slide are carried out with the aid of motors, manual control of the tail stock is undesirable.

The object of the invention is to provide a machine tool in which the tail stock need to be displaced by hand.

According to the invention this is achieved in a machine tool of the kind set forth in the preamble by means of a coupling device for relatively coupling and discoupling the tail stock and the support, the longitudinal gear constituting a common drive for both of them in the coupled state, said coupling device comprising a position sensor detecting the correct position for coupling the tail stock and the support with one another. In this case the displacement of the tail stock does not require an economically disadvantageous, separate drive comprising a motor and the tail stock can be accurately positioned with respect to the main spindle with the aid of the positioning means of the support.

Further features and advantages of the invention will become apparent from the following description of an embodiment of the invention with reference to the drawings.

Fig. 1 is a front view of a device embodying the invention in the form of a lathe.

Fig. 2 is a plan view of the lathe shown in Fig. 1.

Fig. 3 is a side elevation from the right-hand side of the lathe shown in Figs. 1 and 2.

Fig. 4 is a longitudinal sectional view taken on the line IV-IV in Fig. 5 of the tail stock of the lathe shown in Figs. 1 to 3.

Fig. 5 is a cross-sectional view taken on the line V-V in Fig. 4.

Fig. 6 is an elevational view of a detail in the direction of the arrow VI in Fig. 5.

The frame 2 of the lathe 1 comprises a bed 11 arranged at an angle to the horizontal. With the frame is connected a head stock 3 and on the bed 11 is arranged a tail stock 4, which is displaceable towards and away from the head stock 3, and fixable in position. On the bed 11 is also arranged a support 5, which is displaceable towards and away from the head stock 3 and which comprises a transverse slide 6 displaceable at right angles to the displacing means. With the transverse slide 6 is connected a tool changer 7, which comprises a plurality of turning tools 48, 49 to be placed at will in an operative position.

The head stock 3 comprises a main spindle 16 carrying work piece gripping means formed by a chuck plate 15 for a work piece. The main spindle 16 is mounted in a gear box 10 which comprising in addition a gear wheel transmission. The input shaft 12 of the gear box 10 is coupled through a belt transmission 9 with a driving motor 8. The driving motor 8 is a direct-current motor of controllable speed. The gear wheel transmission in the gear box 10 has a high and a low transmission ratio switchable at will by means of magnetic clutches. Owing to these two transmission ratios in conjunction with the controllable speed of the electric motor 8 the main spindle 16 can be rotated at any desired rate. The chuck plate 15 is actuated by a hydraulic control-device 17 of a kind known per se, which is governed by a pedal (not shown). Through the hydraulic ducts 18 pressurized hydraulic fluid is fed to or drained from the control-device 17 for clamping a work piece in or removing it from the chuck plate 15 respectively. By actuating the chuck plate 15 by means of a pedal a ready work piece can be very rapidly changed against a semi-product to be further machined. This fast changeability contributes to a high productivity.

It will be clearly apparent from Fig. 3 that the bed 11 comprises three planed ways 25, 26, 27. The tail stock 4 is mounted on the lower way 25 and the middle way 26. The support 5 is mounted on the middle way 26 and on the upper way 27. The tail stock 4 can be displaced on the bed 11 towards and away from the chuck plate 15. The tail stock 4 has a center 20 located on the centre line of the main spindle 16. The tail stock 4 also comprises hydraulic means 21 by means of which the center 20 can be loaded in the direction towards the main spindle 16 for gripping a work piece with respect to the tail stock 4. The hydraulic means 21 are also governed by a pedal (not shown) so that during operation a work piece can be rapidly clamped in with the aid of the center 20 and a ready work piece can be as rapidly changed against a semi-product to be further machined. The hydraulic inlet and outlet ducts for the hydraulic means 21 are accommodated in a flexible conduit gutter 22.

The support 5 can be displaced in the longitudinal direction of the bed 11 and hence parallel to the centre line of the main spindle 16 by means of a longitudinal gear 30. The longitudinal gear 30 comprises a screw spindle which is located below the level of the ways 25, 26, 27 and which can be rotated by an electric motor 32 through a toothed belt transmission 33. On the lower side of the support 5 is mounted in known manner a roving nut engaging the screw spindle so that upon rotation of the screw spindle 31 the support 5 is displaced in the longitudinal direction.

The support 5 has two planed ways 37 extending in a direction at right angles to the ways on the bed 11. The transverse slide 6 is displaceable on said ways 37. Like the support itself the transverse slide 6 is displaceable by means of a transverse gear 40. The tranverse gear 40 comprises a screw spindle 41, which can be rotated by an electric motor 42 through a toothed belt transmission 43. The screw spindle 41 also co-operates with a roving nut mounted at the bottom side of the transverse slide 6.

On the transverse slide 6 is mounted the tool changer 7 comprising a tool carrier 50 and a positioning device 51 for the same. At the circumference of the tool carrier 50 can be arranged six external turning tools 49 and at the front face of the tool carrier 50 six inner turning tools 48. The positioning device 51 comprises a motor capable of rotating the tool carrier 50 into the desired position for moving the tool 48, 49 concerned into the operative position.

The lathe is controlled by a numerical control-device arranged in the casing 13. The casing 13 also accommodates the feed for he motor 8. The screw spindle 31 of the longitudinal gear 30 is coupled with an encoder 34, which applies digital signals to the control-device for assessing the rotational position of the screw spindle. By means of these signals the control-device can assess the longitudinal position of the support 5 on the bed 11. In a corresponding manner the screw spindle 41 of the transverse gear 40 is coupled with an encoder 44 for assessing the transverse position of the tool changer 7 on the bed 11. The main spindle 16 is also coupled with an encoder (not shown) so that the rotational position of the main spindle can also be assessed by the control-device. The electric motors 32 and 42 of the longitudinal and the transverse gears respectively are actuated by the control-device. Moreover, this control-device controls the driving motor 8 and the tool changer 7. With the aid of a control-panel (not shown) a machining programme can be introduced into a memory of the control-device for manufacturing a desired work piece.

Fig. 3 furthermore shows that the lathe 1 is provided with a sliding door 53 having a window 54. The sliding door 53 is closed when a work piece is turned in order to retain scattering coolant and chips.

The tail stock 4 comprises a casing 301, in which a cylindrical center carrier 302 is displaceable in an axial direction. The center carrier 302 can be axially displaced with respect to the casing 301 by the hydraulic means 21. These hydraulic means 21 comprise a hydraulic ram 303 in which a piston 304 is slidable. The piston 304 is coupled by means of the piston rod 305 with the center carrier 302. As stated above, the bydraulic means 21 can be actuated by means of a pedal for moving te center carrier 302 between an extended position in which a work piece can be clamped in the lathe and a retracted position in which the work piece can be removed from the lathe. The center carrier 302 is guarded against rotation by a wedge 306 rigidly secured to the casing 301 and a slotted member 307 gripping around the same and being connected with the center carrier 302.

Fig. 5 shows the coupling device 310 embodying the invention. The coupling device 310 comprises a hydraulic ram 311 having a piston 314. With the piston is connected a piston rod 315, whose end remote from the pistion 314 is provided with a coupling pin 316. By supplying pressurized, hydraulic fluid through the supply duct 313 to the ram 311 behind the piston 314 the coupling pin 316 can enter a coupling recess 317 in the support 5. The coupling can be disengaged by loading the piston through a duct 312 on the top side by hydraulic fluid so that the coupling pin 316 is retracted from the coupling recess 317 of the support 5. The coupling device 310 is controlled by the control-device of the lathe. In order to ensure that the coupling device 310 is actuated only in the correct relative positions of the coupling pin 316 and the coupling recess 317 the device comprises a position sensor 320 having a switch 318 connected with the control-device and mounted on the loose head and a lug 319 mounted on the support 5 and formed by a leaf spring.

As stated above, the loose head 4 is displaceable mounted on the lowermost way 25 and on the middle way 26. Since the support 5 is mounted on the middle way 26 and on the upper way 27, it can be moved as far as adjacent the loose head. The invention may, however, also be applied to a machine tool in which the loose head and the support are mounted on the same guide paths.

The tail stock 4 can be fixed in place by the fixing means 25 on the guide ways 25, 26. The fixing means 325 comprise a chuck plate 326, which can be vigourously drawn against the underside of the guide way 26 by means of a hydraulic spring stretching cylinder 327 so that said guide way is clamped tight between the chuck plate 326 and the casing 301 of the tail stock 4. The hydraulic spring stretching cylinder of known type is supported by two pivotally interengaging levers 329, 330. A tensile rod 328 adapted to be drawn inwardly by the action of the spring in the cylinder 327 engages the chuck plate 326. In the situation in which no hydraulic fluid is supplied to the spring stretching cylinder 327 the tensile rod 328 draws the chuck plate 326 forcibly against the underside of the guide path 26. The clamping force is appreciably enhanced by the fact that the levers 329, 330 exposed to the reactive force exerted by the cylinder convert this reactive force into a clamping force exerted on the chuck plate 326. The levers 329, 330 are provided with a lug 331 bearing on a supporting plate 332. The contact point between the lug 331 and the supporting plate 332 constitutes a tilting point for the lever 329. The end of the lever 329 remote from the cylinder engages a nut 334 of a draw bolt 333, which grips behind the chuck plate 326. Consequently, the force exerted by the spring in the hydraulic cylinder 327 and the resultant reactive force are both exerted on the chuck plate 326. The distance of the downward movement of the chuck plate 326 is limited by bolts 335.

The hydraulic spring stretching cylinder 327 is also controlled by the control-device of the lathe, that is in a manner such that the fixing means 325 clamp the tail stock 4 to the guide ways 25, 26 when the coupling device 310 is in the discoupled state and conversely.

T tJ/EA/7

0059013



CLAIM

1. A machine tool comprising a frame, a main spindle rotatably journalled in said frame, a support displaceable with respect to said frame and a tail stock displaceable with respect to the frame for positioning purposes and fixable in place by fixing means, guide means connected with the frame for guiding the support and the tail stock parallel to the main spindle and a longitudinal gear for displacing the support and provided with an automatic control-device for the automatic control of the machine tool characterized by a coupling device for relatively coupling and discoupling the tail stock and the support, the longitudinal gear constituting a common drive for both of them in the coupled state, said coupling device comprising a position sensor detecting the correct position for coupling the tail stock and the support with one another.

"1/4"

0059013

FIG.1

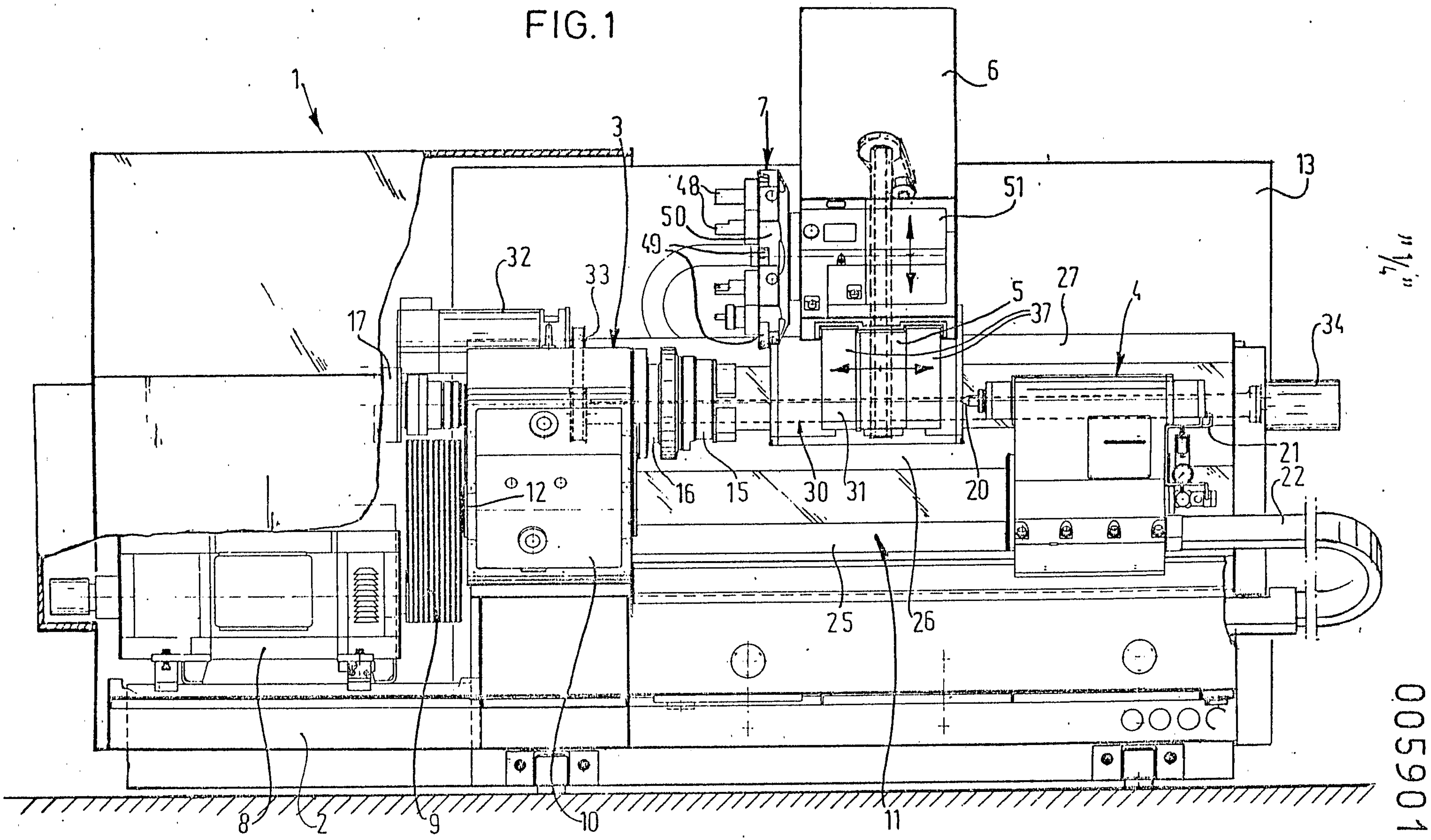

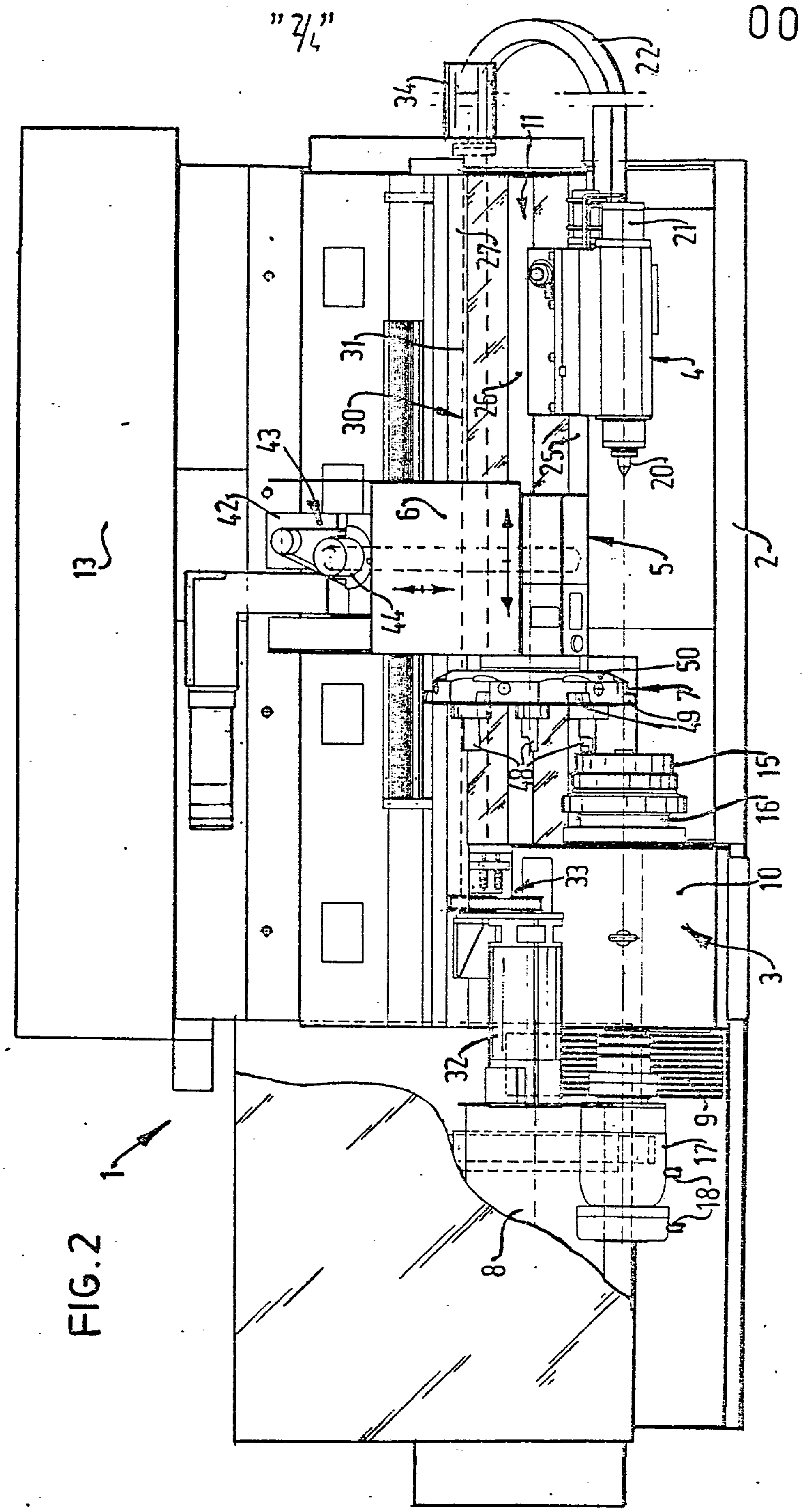
1
2
3
4
5
6
7
8
9
10
11
13
15
16
17
18
20
21
22
25
26
27
30
31
32
33
34
42
43
44
48
49
50

FIG.2

0059013

"3/4"

FIG. 3

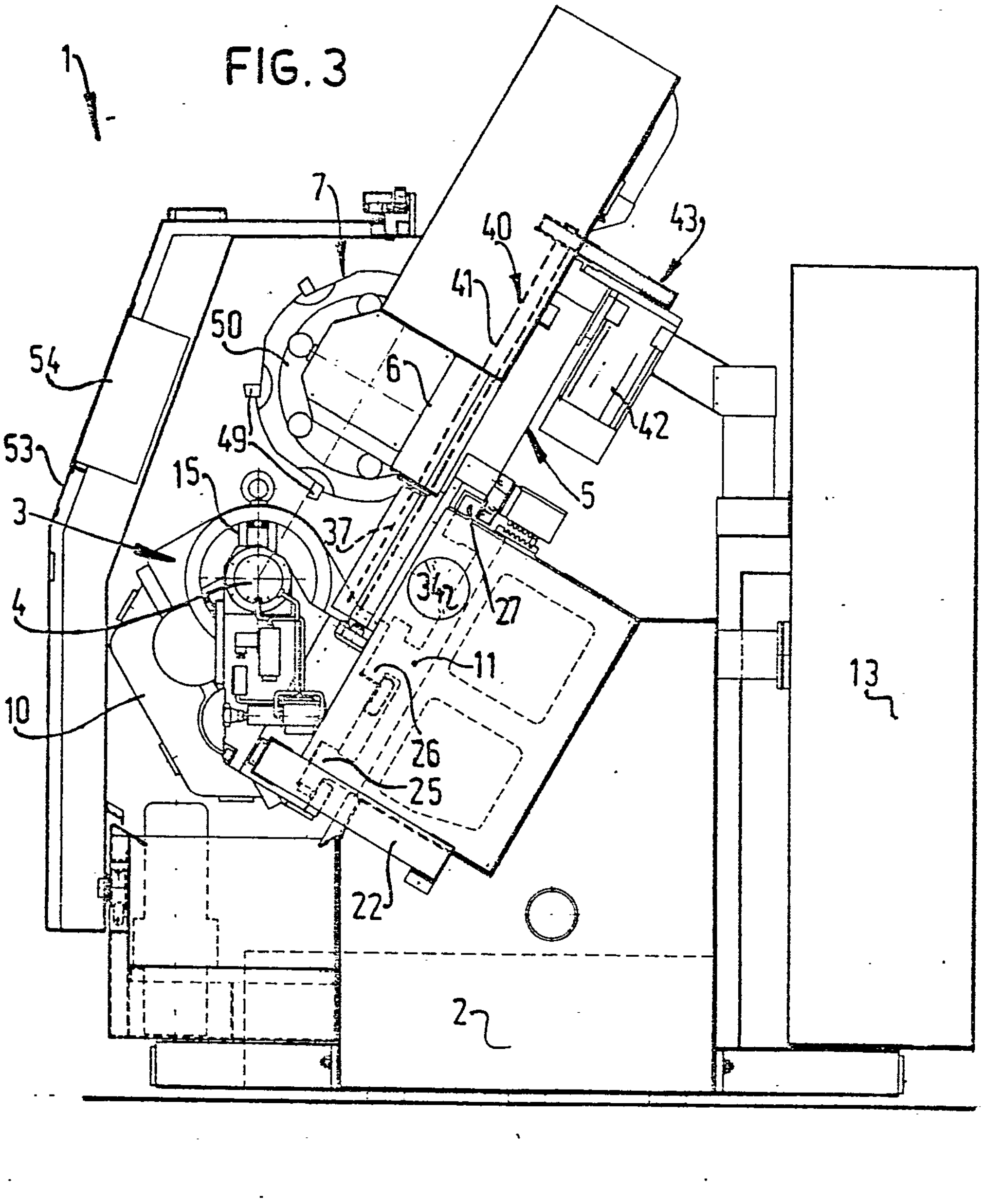

0059013

" 4/4 "

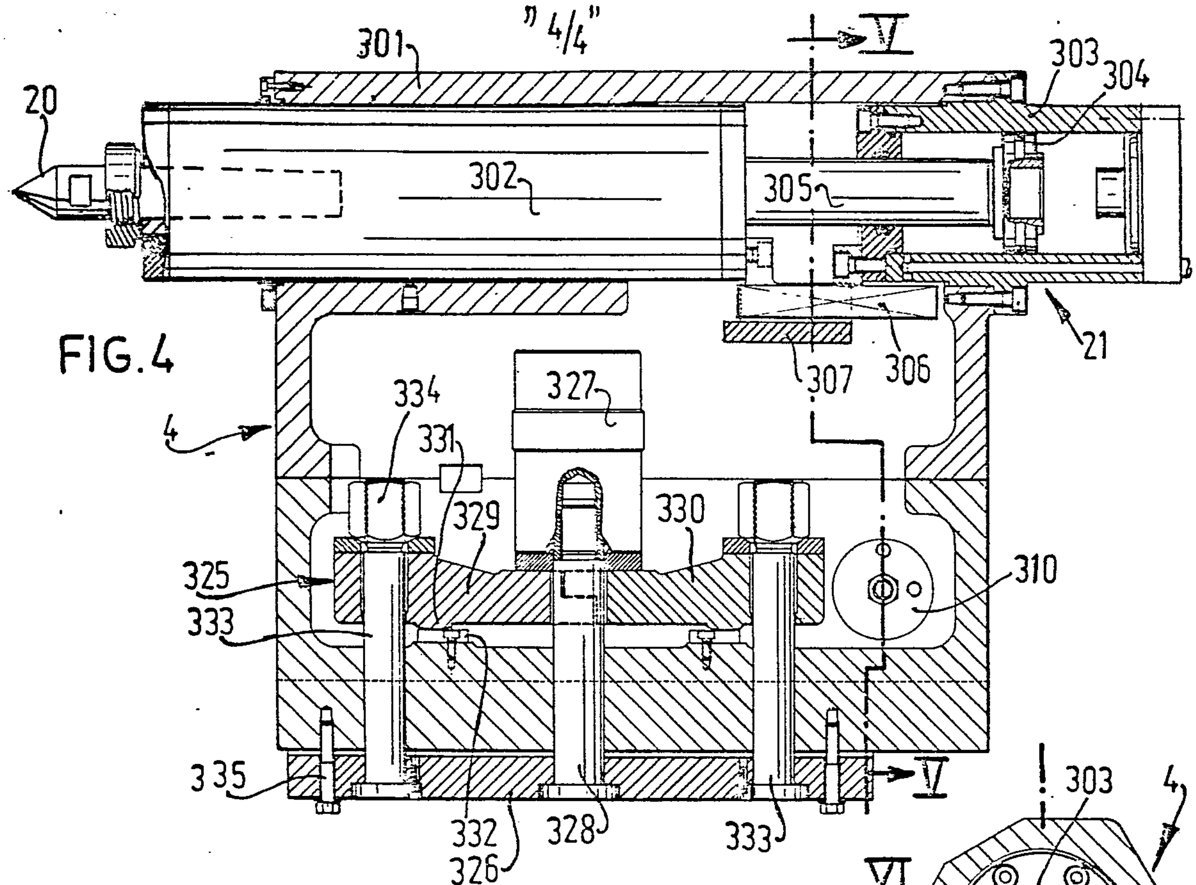


FIG.4

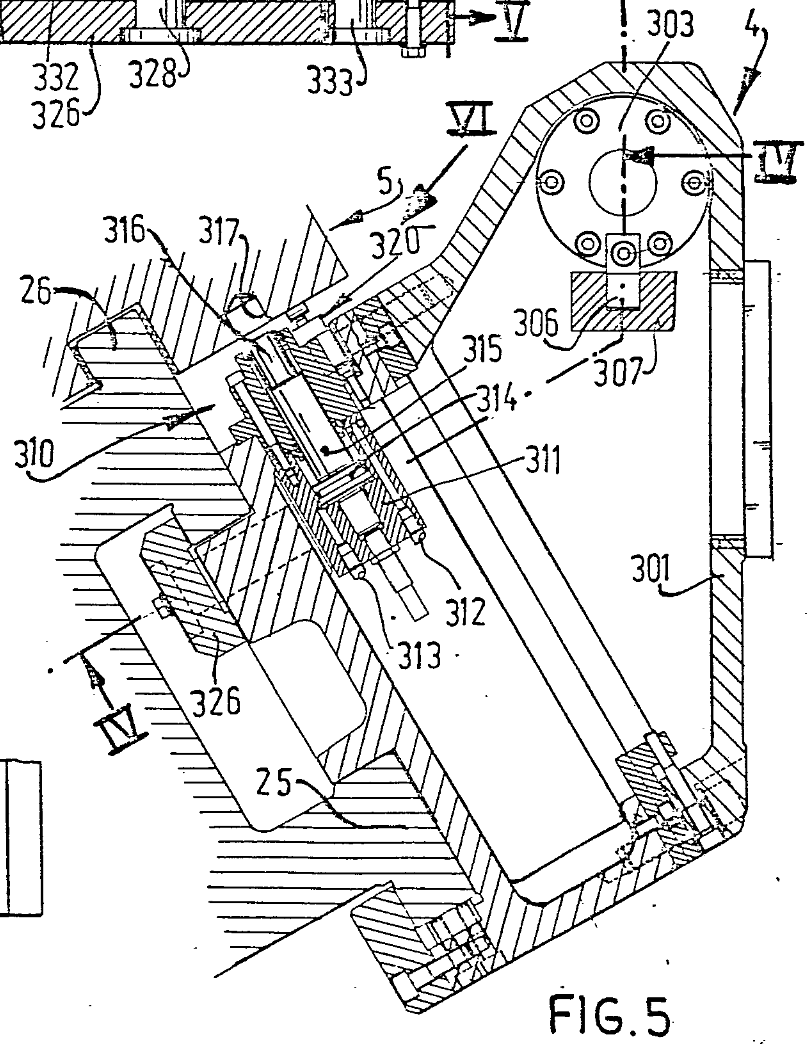


FIG.5

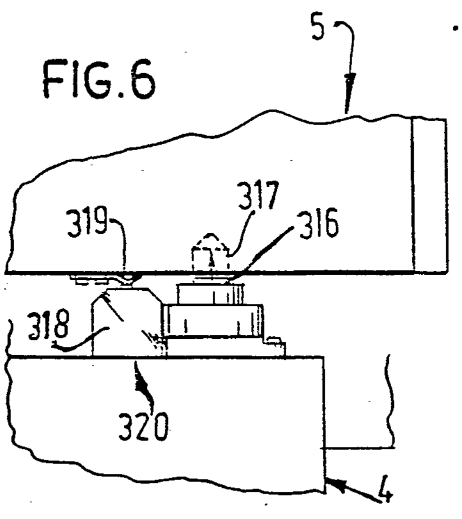


FIG.6

European Patent Office

0059013

Application number

EP 82 20 0157

# EUROPEAN SEARCH REPORT

| Category | Citation of document with indication, where appropriate, of relevant passages | Relevant to claim | CLASSIFICATION OF THE APPLICATION (Int. Cl. 3) |
|---|---|---|---|
| X | BE - A - 561 921 (REMACLE) * Page 5, lines 12-30 * -- | 1 | B 23 Q 1/20 |
| A | EP - A - 0 013 848 (ERNAULT) ---- | | |

**DOCUMENTS CONSIDERED TO BE RELEVANT**

TECHNICAL FIELDS SEARCHED (Int.Cl. 3)

B 23 Q 1/00
B 23 B 23/00
25/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 01-06-1982 | DE GUSSEM |